# EUROPEAN PATENT APPLICATION

(11) **EP 1 655 489 A1**
(43) Date of publication of application: **10.05.2006**
(21) Application number: 05024073.8
(22) Date of filing: 04.11.2005
(51) Int. Cl.: F04B 53/22, F04B 39/14, F04B 39/12

(54) **Modular swash plate compressor**

(30) Priority: 05.11.2004 US 982240
(71) Applicant: Haldex Brake Corporation, Kansas City, MO 64153 (US)
(72) Inventor: Koelzer, Robert L., Kearney MO 64060 (US)
(74) Representative: Rehberg Hüppe + Partner

(57) **Abstract**

A modular swash plate compressor is disclosed generally comprising a housing and a swash plate disposed in the housing. Typically, the housing includes a cylinder block with a plurality of piston channels therein, and a plurality of pistons are slidably disposed in the piston channels and are coupled to the swash plate, which is mounted on a drive shaft, The drive shaft is selected from a plurality of drive shafts, each of which is designed for a different type of vehicle and all of which can disposed In the housing and a channel in the swash plate. The housing is mounted to a mounting flange selected from a plurality of mounting flanges, each of which is designed for a different type of vehicle and all of which can be fastened to the housing.

## Description

### Field Of The Invention

The present invention relates to an apparatus and method for generating compressed air. More specifically, the invention relates to a modular axial piston compressor for motor vehicles having a single body and interchangeable parts connected thereto.

### Background Of The Invention

Swash plate compressors are generally known in the art. These compressors typically employ a cylinder block with a plurality of piston channels mounted on a drive shaft. A plurality of pistons are sildably disposed in the piston channels and are coupled to a swash plate that is also mounted on the drive shaft. In accordance with the rotation of the drive shaft, the swash plate pivots, causing reciprocal motion of the pistons within the piston channels, thereby alternately creating suction and compression strokes.

These compressors employ a variety of mechanisms that utilize the rotational force of the drive shaft to make the swash plate pivot, such as an actuating assembly with a slanted surface underneath the swash plate, as disclosed in U.S. Patent No. 6,439,857 to Koelzer and assigned to the assignee of the present application, an assembly of rotating and nonrotating plates, as disclosed in U.S. Patent No. 5,626,463 to Kimura, and a rotatable cylinder block, as disclosed in U.S. Patent No. 5,394,898 to Takagi.

As the swash plate pivots, the pistons reciprocate within the piston channels of the cylinder block, alternately drawing fluid to be compressed into the channels and subsequently compressing and discharging the fluid. In this way, the rotational force of the shaft is converted into axial motion of the pistons, enabling the pistons to alternately perform the functions of suction and compression, and thus, fluid is first drawn into a piston channel and is subsequently compressed and discharged from the piston channel.

However, due to the particular arrangement of the parts in such a system, mutual exclusivity between the Individual pieces of compressors for different types of vehicles is no longer necessary. Therefore, compressors of the aformentioned type that are constructed such that they include, as permanent parts, individual pieces (e.g. swash plate housing) that are designed to mate only with specific versions of other individual pieces or are configured to be mounted to only a particular type of vehicle needlessly complicates, and increases the cost of, the manufacturing and maintenance of these compressors, and further, reduces the versatility of the main housing body of the compressor.

What is desired, therefore, is a method and apparatus for compressing fluid that allows a single main housing to be used with different varieties of particular individual parts designed for different makes or models of vehicles. What is further desired is a method and apparatus that allows individual compressor parts to be replaced with newer versions of those parts without having to replace the entire compressor.

### Summary Of The Invention

Accordingly, it is an object of the present invention to provide a swash plate compressor that permits a single main housing to be used with shafts, flanges, and covers of different vehicle types.

It is a further object of the invention to provide a swash plate compressor that permits the same main housing to be used with newer versions shafts, flanges, or covers that may be required for successive models of a particular vehicle.

It is yet another object of the present invention to provide a swash plate compressor that permits a shaft, flange, or cover to be easily replaced when needed, such as when one of these parts breaks or is discovered to be defective, without having the replace the rest of the compressor.

In order to overcome the deficiencies of the prior art and to achieve at least some of the objects and advantages listed, the invention comprises a modular swash plate compressor including a compressor housing, a swash plate disposed in the housing, the swash plate having a channel therein, a drive shaft disposed in the housing and the channel, the drive shaft being configured to operate with a particular type of vehicle, and a mounting flange fastened to the housing, the flange being configured to mount the compressor to the particular type of vehicle, wherein the housing and the swash plate are adapted to receive any one of the drive shaft and at least one other drive shaft configured to operate with at least one other type of vehicle, and wherein the housing is adapted to be mounted to any one of the mounting flange and at least one other mounting flange configured to mount the compressor to the at least one other type of vehicle.

In another embodiment, the invention comprises a modular swash plate compressor including a compressor housing, a swash plate disposed in the housing, the swash plate having a channel therein, a drive shaft selected from a plurality of drive shafts, each of which is configured to operate with a different type of vehicle, disposed in the housing and the channel, and a mounting flange selected from a plurality of mounting flanges, each of which is configured to mount the compressor to a different type of vehicle, fastened to the housing.

In yet another embodiment, the invention comprises a modular swash plate compressor including a plurality of mounting flanges, each of which is configured to mount the compressor to a different type of vehicle, a compressor housing adapted to be mounted to any one of the mounting flanges, a swash plate disposed in the housing, the swash plate having a channel therein, and a plurality of drives shafts, each of which is configured to operate with a different type of vehicle, wherein the housing and the swash plate are adapted to receive any one of the drive shafts.

In still another embodiment, the invention comprises a modular swash plate compressor including providing a compressor housing, disposing a swash plate having a channel therein in the compressor housing, selecting a drive shaft from among a plurality of drive shafts, each of which is configured to operate with a different type of vehicle, disposing the selected drive shaft in the housing and the channel In the swash plate, selecting a mounting flange from among a plurality of mounting flanges, each of which is adapted to mount the compressor to a different type of vehicle, and fastening the housing to the selected mounting flange.

Other features and advantages of the present invention will become apparent to one with skill in the art upon examination of the following drawings and the detailed description. Any advantages described in this specification are solely mentioned as non-limiting examples not restricting the scope of the invention to embodiments leading to such advantages. Additionally, advantages or technical effects mentioned in the specification might be achieved by embodiments without other mentioned advantages or technical effects or additional to other mentioned advantages or technical effects. Additional features may be taken from the drawings, in particular from the geometry of the illustrated components, from the relative dimensions of features of one component or of a plurality of components from one drawing or from a plurality of drawings, from the relative arrangement of a plurality of components or from the interrelation or cooperation of a plurality of components. The combination of features taken from different embodiments of the invention and/or of a single feature or of a plurality of features taken from one claim or from a plurality of claims (also such ones differing from the originally field claim dependencies) is possible and herewith suggested. Additionally, it is possible to cancel one or more features from the embodiments being described in the specification, being illustrated in the drawings or being contained in the claims.

### Brief Description Of The Drawings

Figure 1 is an isometric view of a awash plate compressor in accordance with the invention.

Figure 2 is a side, partially cross-sectional, partially schematic view of a compressor known in the prior art.

Figure 3 is a side, partially cross-sectional view of a compressor known in the prior art.

Figure 4 is plan view of various combinations for the swash plate compressor of Figure 1.

Figure 5 is a side, partially cross-sectional view of the compressor of Figure 1.

Figure 6 is an end, partially cross-sectional view of the compressor of Figure 1.

### Detailed Description Of The Drawings

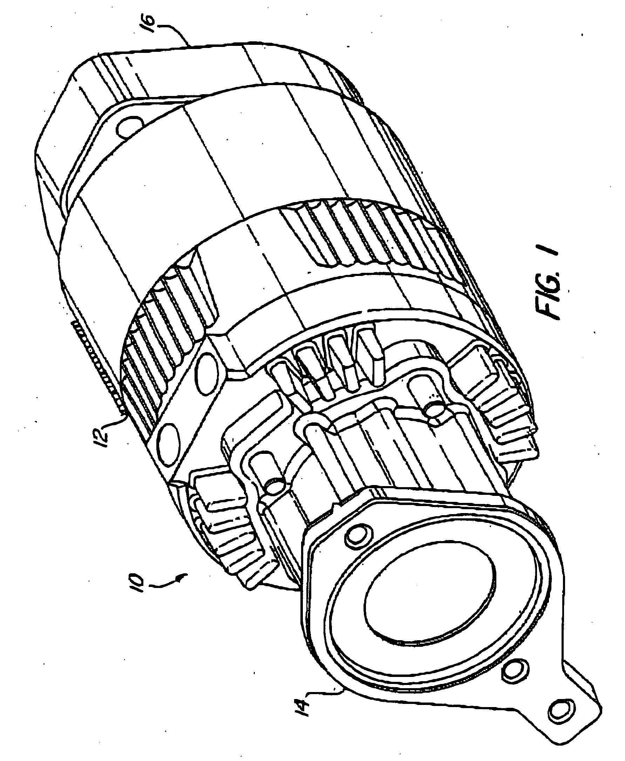

The basic components of one embodiment of a modular swash plate compressor in accordance with the invention are illustrated in Figure 1. As used in the description, the terms "top," "bottom," "above," "below," "over," "under," "above," "beneath," "on top," ''underneath," "up," "down," "upper," "lower," "front," "rear," "back," "forward" and "backward" refer to the objects referenced when In the orientation illustrated in the drawings, which orientation is not necessary for achieving the objects of the invention.

The compressor 10 includes a main housing 12, a rear mounting cover 14, and a front mounting flange 16. When in use, the compressor 10 is installed on a vehicle, such as an over-the-road truck, and generates compressed air for the vehicle's pressure system, which typically includes a tank (not shown) that supplies the compressed air to various accessories, such as, for example, the brake system. This production of the compressed air begins by receiving air, which may or may not be delivered from a turbocharger (not shown), in response to a reduction of the air pressure in the air system to or below a reference pressure.

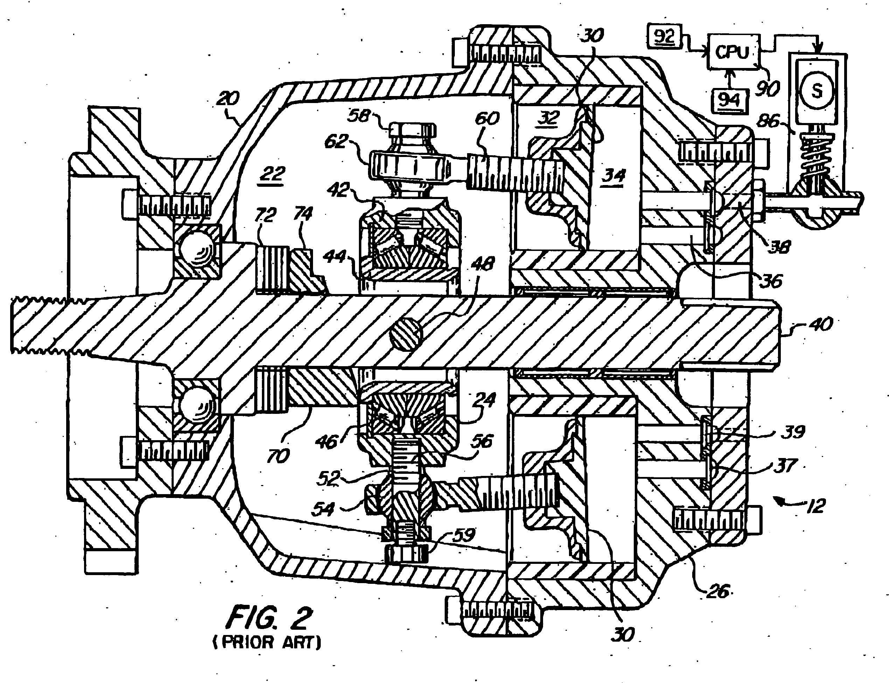

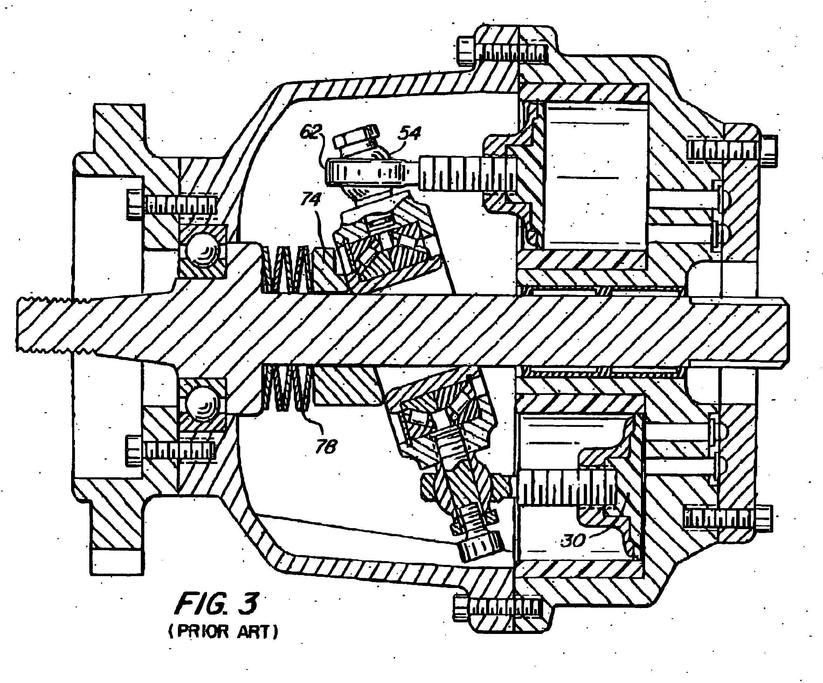

The basic components of one embodiment of the main housing 12 of the compressor 10 are illustrated in Figures 2-3. The main housing 12 Includes a stationary swash plate housing 20 defining a crank chamber 22 therein, a swash plate 24 disposed in the crank chamber 22, and a stationary cylinder block 26 connected to the housing 20. A plurality of pistons 30 are coupled to the swash plate 24, and the cylinder block 26 has a plurality of channels 32 that receive the pistons 30. The pistons 30 are reciprocally displaceable within the channels 32 in order to provide for suction and compression strokes. A space 34 in the channels 32 above the pistons 30 is in fluid communication with the air system via a plurality of intake ports 36 and discharge ports 38. Accordingly, the air pressure in the space 34 corresponds to air pressure In the air system, ensuring a state of pressure equilibrium for the compressor 10, as further explained below.

In order to provide fluid communication between the intake and discharge ports 36, 38, the compressor has a head plate (not shown) provided with a plurality of check valves 39, 37 preventing back-feeding of the air to be discharged. In certain advantageous embodiments, the check valves may be of the reed or poppet varieties, allowing air to flow along a path from a high-pressure area to a low-pressure area. Thus, as the pressure in the air system downstream from the compressor 10 lowers, airflow is directed from the channels 32 to the air system through the valves 37 provided in the discharge ports 38. Accordingly, air pressure above the pistons 30 is lowered, thereby causing displacement of the swash plate 24 and the pistons 30. As a result, the suction stroke generates a negative pressure sufficient to allow air to enter the cylinder block 26 through the valves 39 provided in the Intake ports 36.

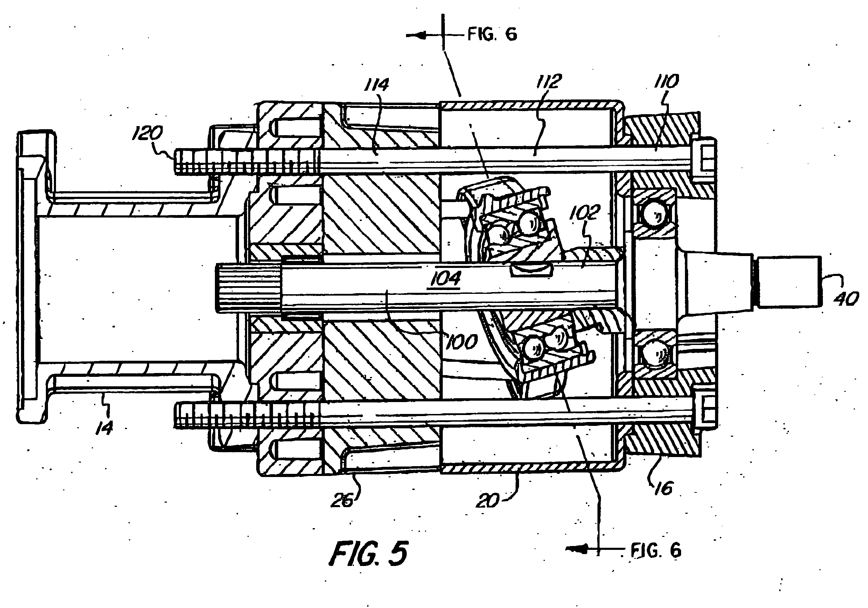

As shown more cleerly in Figure 5, the cylinder block 26 has a first drive shaft channel 100, and the swash plate 24 has a second drive shaft channel 102. Accordingly, in addition to the main housing 12, the compressor 10 includes a drive shaft 40 disposed in a channel 104 defined by the channels 100 and 102.

Referring again to Figures 2-3, the swash plate 24 is comprised of a rotatable inner part 44 coupled to a pin 48 to rotate about the shaft 40, and an outer part 42 connected to the inner part 44 via a bearing assembly 46. In certain embodiments, in order to prevent the outer part 42 of the swash plate 24 from rotating, the swash plate receives a radially extending stopper 59 that engages an axial groove of the housing 20. The stopper is dimensioned so that the stopper's head does not slide out of engagement with the groove even when the swash plate 24 is maximally displaced from a position perpendicular to the shaft 40. In other embodiments, a gimbal arm (not shown) may be used to prevent the outer part 42 from rotating.

The entire swash plate 24 is pivotal with respect to the shaft 40. A mechanism for translating pivotal displacement of the swash plate 24 to reciprocal axial displacement of the pistons 30 includes a plurality of ball links, each of which is comprised of a rod 52 and a ball element 54. In certain embodiments, the rods 52, which are spaced angularly equidistantly from one another along an outer periphery of the swash plate 24 and extend radially therefrom, are bolts having a thread 56 on one end and a nut 58 on the opposite end. The ball element 54 has a spherical outer surface slidably engaging a piston rod 60, which extends parallel to the rotating shaft 40, for synchronous axial displacement while allowing the piston rod 60 and ball element 54 to be angularly displaced relative to one another.

To displace the pistons 30 and swash plate 24 relative to one another as the swash plate 24 pivots, each piston rod 60 has a flange 62, the inner surface of which cooperates with an outer extremity of the ball element 54. Accordingly, as the swash plate 24 is angularly displaced from a position perpendicular to the drive shaft 40, the cooperating surfaces of the ball element 54 and flange 62 slide relative to one another. Such relative displacement allows the piston rod 60 and ball element 54 to move axially together, while the ball element 54 rotates within the flange 62 in response to the angular motion of the swash plate 24. Though the cooperating surfaces of the ball element 54 and flange 52 are depicted as annular, in certain embodiments, other shapes that move synchronously while being angularly displaced relative to one another may be used.

The pistons 30 are idle in a state of pressure equilibrium when a piston-generated force acting upon a swash plate 24 and corresponding to the air pressure in the space 34 above the pistons 30 is equal and oppositely directed to a thrust generated by an actuator 70 against the swash plate 24. This state of equilibrium occurs when the swash plate 24 is In a substantially perpendicular position with respect to the axis of a drive shaft 40. Once the balance of air pressure has been disturbed, the thrust from the actuator 70 exceeds the lowered piston-generated force to angularly displace the swash plate 24 from its perpendicular position. As a result, the pistons 30 begin to reciprocally move In the channels 32, as will be further explained below. Thus, the more the air pressure in the air system drops, the larger the angular displacement of the swash plate 24 and the longer the strokes of the pistons 30.

The swash plate 24 pivots about the pin 48 upon a thrust exerted by the actuator 70. In certain advantageous embodiments, the actuator 70 includes a resilient element 72, such as, for example, Belleville washers, and a cam collar 74. The washers 72 are connected to the cam collar 74, which has a slanted cam surface with respect to the shaft 40, an extended part of which is always in contact with the swash plate 24. The swash plate 24 Is always under pressure existing above the pistons 30, and thus, in order to maintain the swash plate 24 in a position perpendicular to the shaft 40 during the state of equilibrium, the cam collar 74 must continuously preload the swash plate 24. However, this contact in the state of equilibrium does not generate a thrust sufficient to overcome the pressure above the pistons 30 and pivot the swash plate 24. In operation, the washers 72 expand in response to the pressure drop in the air system to or below the reference value. As a result, the cam collar 74 is axially displaced to pivot the swash plate 24, the movement of which generates the suction and compression strokes of the pistons 30.

As a result of this arrangement, even when the pistons 30 are idle, and thus, the compressor 10 is not compressing air, the shaft 40 continues to rotate. As a consequence, accessories coupled to the shaft 40, such as, for example, a fuel pump, continue to function. Additionally, because the drive shaft 40 is rotatably disposed in the swash plate 24, rather than integrally formed therewith or fixedly connected thereto, the shaft 40 can easily be removed from the main housing 12 of the compressor 10 by simply separating housing 20 from the cylinder block 26, detaching the device securing the inner part 44 of the swash plate to the shaft 40, such as the pin 48, and sliding the shaft 40 out of the swash plate 48.

Although the actuator 70 is shown rotatably mounted on the shaft 40, in certain embodiments, the actuator 70 can be mounted on the housing 20. Further, in certain embodiments, other types of resilient elements, such as different types of compression springs 78, such as, for example, bellows, are used Instead of the Belleville washers described above. In other embodiments, the actuator includes a servo piston (not shown), which is actuated In response to a pilot signal representing the reference value of the air system's pressure and generated by an external source once the pressure falls down to or below the threshold. The servo piston, which is attached to a mechanical link such as a fork, displaces the cam collar 74 to exert a thrust to pivotally displace the swash plate 24.

In order to temporarily release the engine of the truck from an additional load under certain conditions, such as when a truck climbs up a steep hill, a solenoid 86 can close the discharge port 38 upon an on-demand signal from a driver. As a result, the pressure In the spaces 34 above the pistons 30 rapidly rises, enabling the compressor 10 to reach a state of equilibrium within a short period of time. Opening of the solenoid 86 allows the compressor 10 to return to a normal mode of operation.

Additionally, the vehicle is provided with a central processing unit 90 for receiving a signal that is generated by a pressure sensor 92 after air pressure in the air system has reached a predetermined upper threshold. Once this signal is processed, the solenoid 86 Is actuated to block the discharge port 38.

Furthermore, the central processing unit 90, which is typically a computer, is able to process a signal indicating the overall load on the vehicle's engine. Thus, if a signal indicative of the load exceeds a certain threshold, the processing unit 90 generates a pilot signal actuating the solenoid 86, which closes the discharge port 38. In this case, the compressor rapidly achieves a state of equilibrium, as explained above, and stops compressing air.

Since the reciprocal motion of the pistons is arrested after the state of equilibrium is reached, the need for lubrication between the pistons 30 and the cylinder block 26 is reduced. In certain embodiments, in order to decrease the need the lubrication even further, the channels 32 and pistons 30 are coated with wear-resistant materials. Accordingly, the pistons 30 may, for example, be coated with a material selected from the group including a PTFE material filled with bronze and Molybdenum Disulfide and a PTFE material filled with graphite and PPS, and an anodized aluminum coating (close to 60RC hardness) may be applied to the surfaces of the channels 32. Accordingly, with the appropriate selection of coating materials, along with the controllable motion of the pistons 30, lubrication between the pistons 30 and the walls of the cylinder block 26 is not necessary.

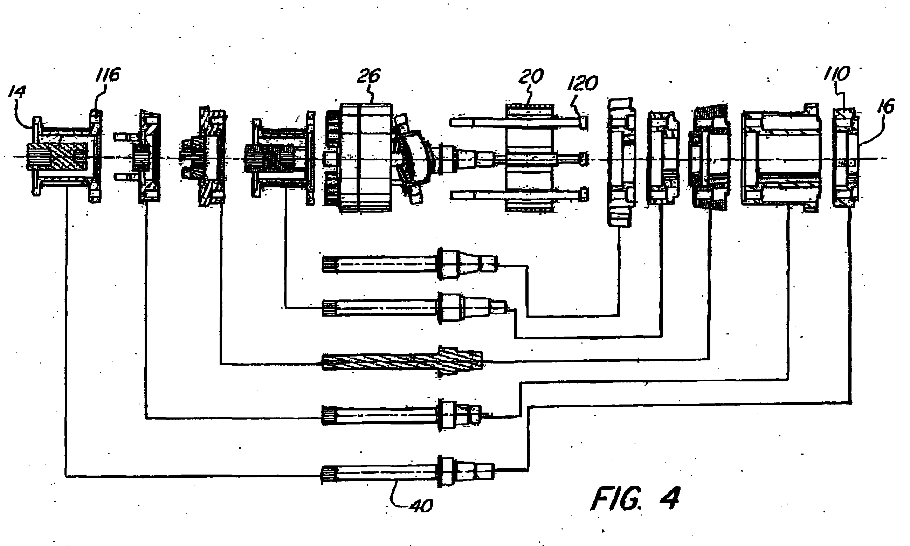

As illustrated in Figure 4, In order to property mount the compressor 10 to a specific type and/or model of vehicle, the compressor includes a front mounting flange 16 connected to the swash plate housing 20, Similarly, in certain cases, when such is required by the particular type and model of vehicle In which the compressor 10 is being used, a rear mounting cover 14 is connected to the cylinder block 26. This front mounting flange 18 and, If applicable, rear mounting cover 14, correspond to the drive shaft 40, such that all three parts are selected to accommodate a particular make and/or model of the vehicle on which the compressor 10 is used.

The housing 12 is adapted to be mounted to any one of a plurality of mounting flanges 16 configured to mount the compressor to particular types of vehicles. Similarly, the housing 12 and swash plate 24 are adapted to receive any one of a plurality of shafts 40 configured to operate with particular types of vehicles, in certain advantageous embodiments, the housing 12 is also adapted to be fastened to any one of a plurality of rear mounting covers 14 configured for particular types of vehicles.

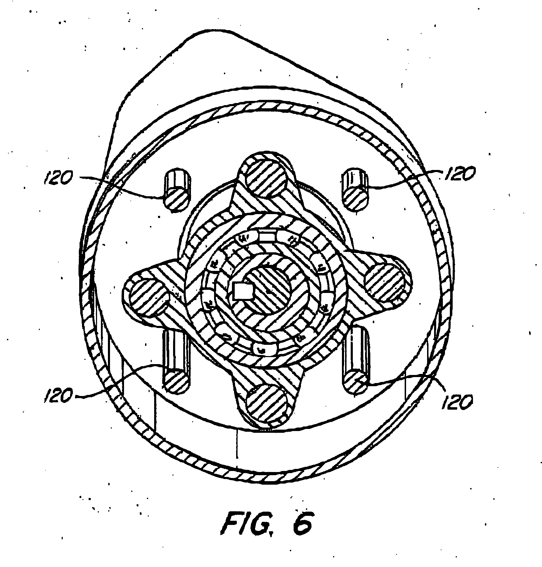

As illustrated in Figures 5-6, the front mounting flange 16, swash plate housing 20, cylinder block 26, and rear mounting cover 14 have first, second, third, and fourth sets of fastener holes 110, 112, 114, 116, respectively, all of which are axially aligned. Accordingly, all four of these parts are simultaneously connected to one another via a plurality of fasteners 120, such as, for example, bolts, disposed in the sets of fastener holes 110, 112, 114, 116.

The particular arrangements described above regarding the manner in which the shaft 40 is disposed in the main housing 12 and the manner in which the front mounting flange 16, swash plate housing 20, cylinder block 26, and, if applicable, rear mounting cover 14 are connected together facilitates easy interchangeability of shafts 40, front mounting flanges 16, and, if applicable, rear mounting covers 14 with the main housing 12 of the compressor 10. Accordingly, the main housing 12 can be used with any of a variety of different vehicles by simply removing the fasteners 20 from fastener holes 110, 112, 114, 116, separating the housing 20 from the cylinder block 26, removing the pin 48, if applicable, disposing the appropriate drive shaft 40 in the drive shaft channel 104, inserting the pin 48, if applicable, and fastening together the front mounting flange 16, swash plate housing 20, cylinder block 26, and rear mounting cover 14 by replacing the plurality of fasteners 120 in the fastener holes 110, 112, 114, 116.

In this manner, the main housing 12 can also be used at another time for a different set of corresponding parts―i.e. shaft, front mounting flange, and, if applicable, rear mounting cover. Similarly, in this manner, any of the aforementioned corresponding parts, when broken or outdated, may be qulckly and easily removed and replaced with a new part.

It should be understood that the foregoing is illustrative and not limiting, and that obvious modifications may be made by those skilled in the art without departing from the spirit of the invention. Accordingly, reference should be made primarily to the accompanying claims, rather than the foregoing specification, to determine the scope of the invention.

## Claims

1. A modular swash plate compressor, comprising:
a compressor housing;
a swash plate disposed in said housing, said swash plate having a channel therein;
a drive shaft selected from a plurality of drive shafts, each of which is configured to operate with a different type of vehicle, disposed in said housing and said channel; and
a mounting flange selected from a plurality of mounting flanges, each of which is configured to mount the compressor to a different type of vehicle, fastened to said housing.

2. The compressor as claimed in claim 1, wherein said housing has a first end and a second end, and wherein said mounting flange is fastened to the first end of said housing, further comprising a mounting cover selected from a plurality of mounting covers, each of which is configured for a different type of vehicle, fastened to the second end of said housing.

3. The compressor as claimed in claim 1, wherein said compressor housing comprises:
a swash plate housing fastened to said mounting flange; and
a cylinder block fastened to said swash plate housing.

4. The compressor as claimed in claim 3, wherein said mounting flange has a first set of fastener holes, said swash plate housing has a second set of fastener holes axially aligned with the first set of fastener holes, and said cylinder block has a third set of fastener holes axially aligned with the first and second sets of fastener holes, further comprising a plurality of fasteners, each of which is disposed in one of the holes in each of the first, second, and third sets of fasteners holes.

5. The compressor as claimed in claim 1, wherein said housing has at least one piston channel therein, further comprising:
at least one piston disposed in the at least one piston channel and coupled to said swash plate;
an actuator disposed in said housing, said actuator having a cam with an aperture axially aligned with the channel in said swash plate, said cam being rotatable with any one of the plurality of drive shafts, and, in a first position, exerts a force on said swash plate appropriate to retain said swash plate in a position perpendicular to the channel in the swash plate such that said at least one piston remains idle, and, in a second position, exerts a force on said swash plate appropriate to to pivot said swash plate, thereby causing reciprocal motion of said at least one piston within the piston channel.

6. A modular swash plate compressor, comprising:
a plurality of mounting flanges, each of which is configured to mount the compressor to a different type of vehicle;
a compressor housing adapted to be mounted to any one of said mounting flanges;
a swash plate disposed in said housing, said swash plate having a channel therein; and
a plurality of drive shafts, each of which is configured to operate with a different type of vehicle, wherein said housing and said swash plate are adapted to receive any one of said drive shafts.

7. A method of assembling a modular swash plate compressor, the method comprising:
providing a compressor housing;
disposing a swash plate having a channel therein in the compressor housing;
selecting a drive shaft from among a plurality of drive shafts, each of which is configured to operate with a different type of vehicle;
disposing the selected drive shaft in the housing and the channel in the swash plate;
selecting a mounting flange from among a plurality of mounting flanges, each of which Is adapted to mount the compressor to a different type of vehicle; and
fastening the housing to the selected mounting flange.

8. The method as claimed in claim 7, further comprising fastening the mounting flange to a vehicle.

9. The method as claimed in claim 7, wherein the housing has a first end and a second end, and wherein the step of fastening includes fastening the first end of the housing to the mounting flange, the method further comprising:
selecting a mounting cover from among a plurality of mounting covers, each of which is configured for a different type of vehicle; and
fastening the selected mounting cover to the housing.

10. The method as claimed in claim 9, further comprising fastening the mounting cover to a vehicle.

11. The method as claimed in claim 7, wherein the housing comprises a swash plate housing and a cylinder block; wherein the step of fastening the compressor housing to the mounting flange includes fastening the swash plate housing to the cylinder block.

12. The method as claimed in claim 11, wherein said mounting flange has a first set of fastener holes, said swash plate housing has a second set of fastener holes axially aligned with the first set of fastener holes, and said cylinder block has a third set of fastener holes axially aligned with the first and second sets of fastener holes, wherein the step of fastening includes disposing a plurality of fasteners into the first, second, and third sets of fasteners holes.
